Europäisches Patentamt

European Patent Office

Office européen des brevets

(11) Publication number: **0 073 493**
A2

## EUROPEAN PATENT APPLICATION

(21) Application number: 82107872.2

(22) Date of filing: 26.08.82

(51) Int. Cl.³: **B 60 H 1/00**

(30) Priority: 26.08.81 JP 125222/81

(43) Date of publication of application: 09.03.83
Bulletin 83/10

(84) Designated Contracting States: DE FR GB

(71) Applicant: NISSAN MOTOR COMPANY, LIMITED, No.2,
Takara-cho, Kanagawa-ku, Yokohama-shi
Kanagawa-ken 221 (JP)

(72) Inventor: Uekusa, Yasuyuki, 13-1-205,
Tsurugaoka 2-chome, Yokosuka-shi Kanagawa-ken (JP)
Inventor: Tanaka, Haruto, 4-4-313, Ookanishi 2-chome
Konan-ku, Yokohama-shi, Kanagawa-ken (JP)
Inventor: Takada, Yukata, 1292, Tsujido, Fujisawa-shi
Kanagawa-ken (JP)
Inventor: Matsuzaki, Yoshitomi, 1176, Tsurumaki, Hatano
Kanagawa-ken (JP)

(74) Representative: Patentanwälte TER MEER - MÜLLER -
STEINMEISTER, Triftstrasse 4, D-8000 München 22 (DE)

(54) Air conditioner for automotive vehicle.

(57) A calculating unit (40) calculates from sensed temperatures of ambient air both outside and inside of the vehicle compartment the desired opening of an air mix door (22) which controls the ratio of heated to cold air driven into the vehicle compartment. When the output of the calculating unit (40) indicates that the air mix door (22) should be moved to the fully cooling position, a controller (42) moves the air mix door (22) via an actuator (26) in accordance with the output of the calculating unit (40) so as to completely cover the heater (20), thereby preventing air from passing through the heater (20) and from being heated. Shortly after the air mix door (22) has completely covered the heater (20), a second controller (44) cuts off the supply of heating energy to the heater. When, on the contrary, the output of the calculating unit (40) indicates that the air mix door (22) should be moved away from the fully cooling position, the heating energy begins to be conducted into the heater (20), thereby allowing the temperature of the air in the compartment to increase gradually. In an alternative, a signal controller including a mechanical linkage responds to the output of the calculating unit via the controller. When the air mix door should be moved to the fully cooling position, the mechanical linkage pivots the air mix door to the position where the air mix door completely covers the heater. Shortly after that, the linkage continues to move to a position in which the supply of heating energy is stopped.

## AIR CONDITIONER FOR AUTOMOTIVE VEHICLE

### BACKGROUND OF THE INVENTION

The present invention relates to an air conditioner for an automotive vehicle, and more particularly to an air conditioner in which the opening degree of an air mix door is determined in accordance with the sensed temperatures of the ambient air outside and inside of a passenger compartment of the vehicle, thereby controlling the ratio of warm and cold air conducted to the compartment.

One conventional air conditioner calculates the degree of opening of the air mix door on the basis of the sensed temperature of the ambient air both outside and inside of the passenger compartment. A feedback control comparator receives an output indicative of the calculated opening degree and controls the air mix door to the corresponding opening via an actuator. The degree of opening of the air mix door is sensed and used as a feedback control signal for the comparator. The degree of opening of the air mix door controls the amount of air passing through a heater, so that the ratio of warm and cold air fed to the passenger compartment is controlled. The heater uses heated fluid, for example, heated engine coolant, passing therethrough and is provided with a cock which is controlled in accordance with the position of the air mix door in order to open and close the heated fluid conduits within the heater.  The water cock is opened when the air mix door is slightly open, and closed when the air mix door is open slightly less than that so that the cock control involves some hysteresis.  This supplies highly heated air abruptly to the passengers within the compartment after the air mix door has opened slightly to activate the water cock.  This may cause the passengers some temporary discomfort.

## SUMMARY OF THE INVENTION

It is an object of the present invention to provide an air conditioner for an automotive vehicle which prevents the temperature of air fed into the vehicle compartment from abruptly rising as the air mix door opens past the point at which the heater operates.  The present invention is intended to provide an air conditioner in which air temperature at the inlet to the passenger compartment changes gradually throughout the entire range of air mix door opening.

According to the present invention, means is provided which calculates the degree of opening of an air mix door in accordance with the sensed temperatures of ambient air both inside and outside of the passenger compartment.  In addition, separate means are provided for controlling actuation of the air mix door and the heating means in response to the calculating means.  While the air mix door is controlled as in conventional air conditioners, the heating means is held disabled only while the air mix door is completely closed. This ensures a minimal initial supply of heated air as the air mix door opens.

In a second embodiment, a single controller is provided to control the actuation of the air mix door and the heating means. When the output of the calculating means indicates that the air mix door should be moved to the fully cool position, the air mix door is first moved by the single controller so as to cover the heating means, thereby preventing the air from passing through the heating means. Only then does the controller interrupt the supply of heating energy to the heating means.

## BRIEF DESCRIPTION OF THE DRAWINGS

In the drawings:

Fig. 1 is a diagramatic view of an air conditioner according to the present invention;

Fig. 2 is a schematic diagram of an electric circuit employed in the air conditioner;

Fig. 3 is a graph of the relationship between compartment temperature, and calculating unit output;

Fig. 4 is a graph of the ranges in which hot-side and cold-side signals $S_5$ and $S_4$ of Fig. 2 are present;

Fig. 5 is a graph of the relationship between the opening of an air mix door, switching of an engine coolant cock, and the temperature of the air supplied to the passenger compartment;

Fig. 6 is a graph, similar to Fig. 5, for a prior art air conditioner;

Fig. 7 is a diagramatic view of the essential part of another embodiment of the present invention; and

Fig. 8 is a slightly enlarged cross-sectional view taken along line VII-VII of Fig. 7.

## DETAILED DESCRIPTION OF THE PREFERRED EMBODIMENTS

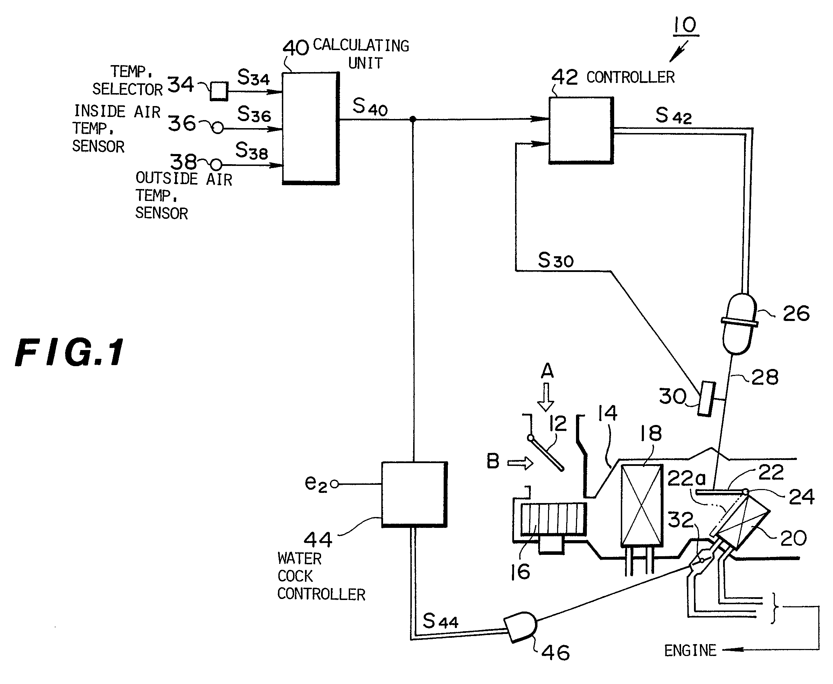

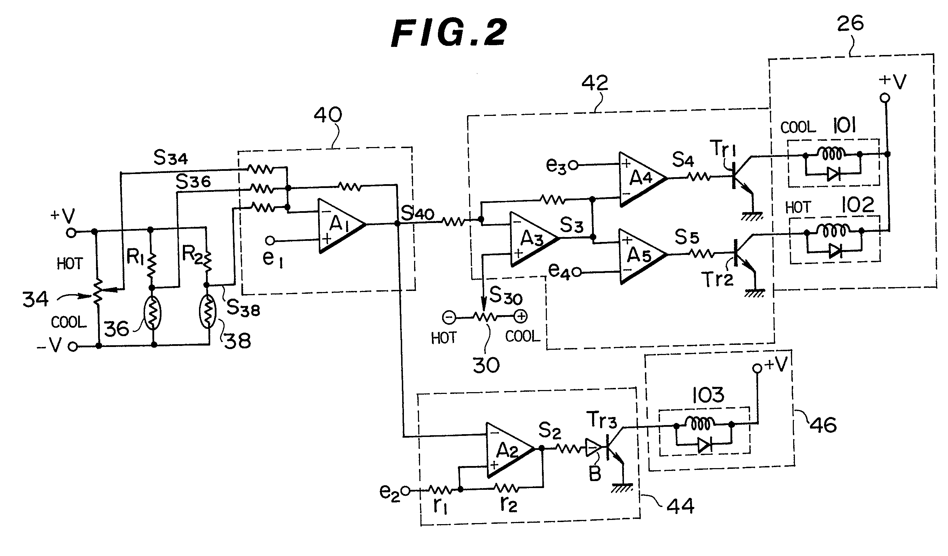

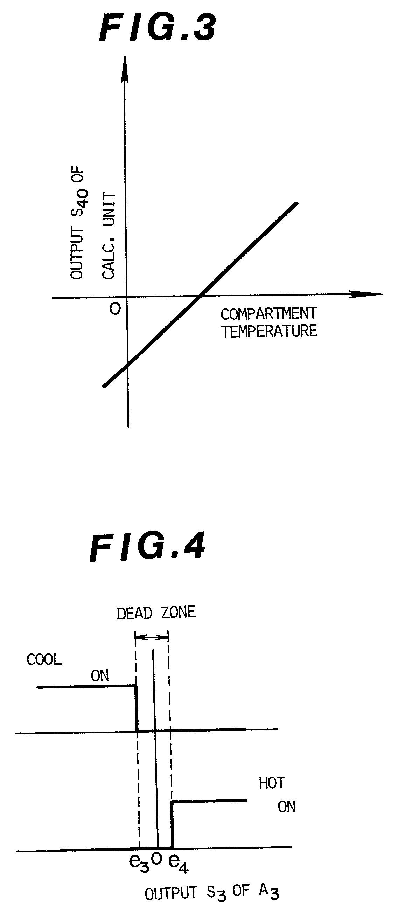

Referring to Fig. 1 of the drawings, there is shown a preferred embodiment of an air conditioner according to the present invention, generally designated by reference numeral 10. An intake door 12, which can select either inside air A or outside air B to be supplied to an air intake passageway 14, is provided within the air intake passageway 14 leading toward a passenger compartment, not shown. A blower 16 provided within the passageway drives the air admitted by the intake door, through an evaporator 18 which cools and dehumidifies the air. The cooled air from evaporator 18 can be heated by a heater 20 by passing therethrough. An air mix door 22, hinged at one end 24 in order to be smoothly pivotable, can continuously cover or expose the heater 20 in order to control the ratio of heated air to cold air entering the passenger compartment. The door 22 drawn in solid lines in Fig. 1 is opened to an intermediate degree. The door 22 can also be opened fully to conduct all of the intake air into heater 20. The door 22a drawn in phantom lines in Fig. 1 completely covers heater 20, thereby preventing intake air from being heated by heater 20. A conventional vacuum actuator 26 is connected via a link or rod 28 to air mix door 22. A position sensor 30 associated with actuator 26 senses the degree of opening of air mix door 22 to output a signal indicative thereof. A water cock 32 selectably prevents or allows the supply of heated engine coolant from the engine to heater 20. When the compartment is to be cooled to its maximum, air mix door 22 is turned so as to cover heater 20 completely, as shown by phantom position 22a, thereby interrupting the passage of the air through heater 20. As shown in Fig. 2, a temperature selector 34, including a potentiometer connected across the plus and minus terminals of a power supply, not shown, outputs a voltage signal $S_{34}$ indicative of a desired inside temperature. An inside air temperature sensor 36, including a thermistor, and a resistor $R_1$ connected in series with the power supply, outputs a signal $S_{36}$ indicative of the temperature of the ambient air inside the compartment, as reflected in the resistance of thermistor 36. An outside air temperature sensor 38, including a thermistor and a resistor $R_2$ connected in series with the power supply, outputs a signal $S_{38}$ indicative of the temperature of the ambient air outside the vehicle, as reflected in the resistance of thermistor 38. A calculating unit 40 calculates from signals $S_{34}$, $S_{36}$, $S_{38}$ and a reference value $e_1$ the desired degree of opening of air mix door 22 in accordance with a predetermined expression to be described later in order to output a signal $S_{40}$ indicative thereof, as shown in Fig. 3.

Calculating unit 40 includes a conventional adder which in turn includes an opertional amplifier $A_1$ which receives signals $S_{34}$, $S_{36}$, and $S_{38}$, scaled by individual resistors at its inverting input terminal and reference voltage $e_1$ at its positive input terminal and which outputs the desired opening signal $S_{40}$, which is also fed back via a resistor to the inverting input terminal.

A controller 42 compares signal $S_{40}$ from calculating unit 40 and signal $S_{30}$ from position sensor 30 to control vacuum actuator 26 and therefore air mix door 22 such that the error $S_{42}$ between signals $S_{40}$ and $S_{30}$ is zero.

An operational amplifier $A_3$ receives signal $S_{30}$ at its positive input terminal and the signal $S_{40}$ at its inverting input terminal. The signal $S_{40}$ also merges via a resistor with the output $S_3$ of op amp $A_3$ which also is connected directly to the inverting input terminal of another op amp $A_4$ and the positive input terminal of yet another op amp $A_5$. The output $S_3$ is also fed back via a resistor to the inverting input of op amp $A_3$. References voltages $e_3$ and $e_4$, where $e_3$ is less than $e_4$, are supplied to the positive input terminal of op amp $A_4$ and the negative input terminal of op amp $A_5$, respectively. The outputs $S_4$ and $S_5$ of op amp $A_4$ and $A_5$ are connected via resistors to the bases of respective transistors $Tr_1$ and $Tr_2$. The emitter terminals of transistors $Tr_1$ and $Tr_2$ are grounded and the collector terminals thereof serve as output terminals connected to air mix door actuator 26.

Actuator 26 includes two electromechanical actuating elements 101 and 102, which each comprise a solenoid and a diode connected in parallel. Elements 101 and 102 are connected in series between the positive terminal +V of the vehicle battery and the collectors of transistors $Tr_1$ and $Tr_2$ respectively. Element 101 urges the actuating rod 28 in the direction of closing off the heater 20 when energized, and element 102 acts in the opposite direction.

When the temperature of the compartment rises above a standard comfortable value, the resistance of sensor 36 decreases so that signal $S_{36}$ decreases. Thus the output of the calculating unit 40 increases, as shown in Fig. 3. Hysteresis comparator $A_2$ of controller 44 switches its output $S_2$ via a buffer B from a low to a high level when signal $S_{40}$ exceeds a certain value greater than $e_2$. This turns on transistor $Tr_3$ and energizes solenoid 103 to close water cock 32 through actuator 46, thereby shutting off the supply of heated water to heater core 20. Reference value $e_2$ and hysteresis interval are set to values above the fully cool values of opening of air mix door.

Differential amplifier $A_3$ amplifies the error $S_4$ between signals $S_{40}$ and $S_{30}$. When signal $S_{40}$ increases, signal $S_3$ from $A_3$ goes from zero to negative. Then, when $S_3$ goes lower than $e_3$, the output $S_4$ of comparator $A_4$ goes high, transistor $Tr_1$ turns on, and cool-side solenoid 101 is energized. This moves air mix door 22 to the cool-side so that signal $S_{30}$ increases and substantially equals $S_{40}$, thereby rendering signal $S_3$ zero. As a result, the output of $A_4$ goes from high to low to turn off transistor $Tr_1$, thereby stopping air mix door 22.

On the contrary, when the temperature of the compartment falls below the desired standard value, air mix door 22 is moved to the hot-side desired position. A dead zone is provided between reference values $e_3$ and $e_4$ to prevent a hunting of air mix door 22. When the signal $S_3$ from amplifier $A_3$ is between $e_3$ and $e_4$, the air mix door assume the final position that it has come within the dead zone.

A water cock controller 44 compares a reference value $e_2$ with the desired signal $S_{40}$ from calculating unit 40 to output a signal $S_{44}$ which actuates a conventional vacuum actuator 46 which in turn closes or opens water cock 32 mechanically.

Water cock controller 44 includes an operational amplifier $A_2$, the inverting input terminal of which receives the desired opening signal $S_{40}$ and the positive input terminal of which receives a reference voltage $e_2$ via a resistor $r_1$. The output $S_2$ of op amp $A_2$ is connected to the positive input terminal thereof via a resistor $r_2$ in conjunction with resistor $r_1$ to induce hysteresis in the response of op amp $A_2$ to changes in signal $S_{40}$. Output $S_2$ is also connected to the base terminal of a transistor $Tr_3$,

the emitter of which is grounded and the collector of which serves as the output terminal to water cock actuator 46.

Actuator 46 includes an actuating element 103, similar to elements 101 and 102, connected in series between the positive terminal of the battery and the collector terminal of transistor $Tr_3$. The solenoid of element 103 is adapted to hold the cock 32 closed when energized.

Assume that the degrees of opening of air mix door 22 in a fully-heating condition and in a fully-cooling condition are 100 and zero percent, respectively, and that the voltages of the desired signals $S_{40}$ corresponding to 100 and zero percents of the degree of opening of air mix door 22 are $V_C$ and $V_H$, where $V_C$ is greater than $V_H$.

The desired degree X of opening of air mix door can be expressed as:

$$X = A \cdot T_S + B (T_S - T_R) + C \cdot T_A + D$$

where $T_S$ is a temperature set by selector 34, $T_R$ is the temperature of the air inside the compartment measured by sensor 36, $T_A$ is the temperature of the ambient air outside the vehicle measured by sensor 38, and A, B, C and D are constants. The output signal $S_{40}$ from calculating unit 40 can be expressed as:

$$S_{40} = V_C - \alpha \cdot X$$

where α is a positive opening-degree voltage conversion constant.

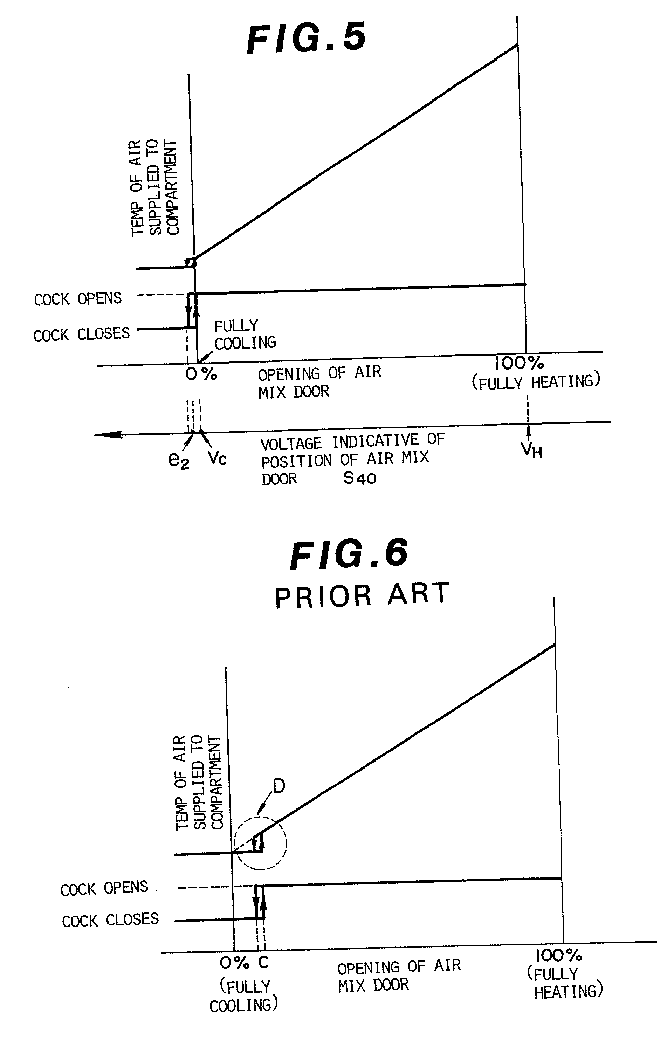

It can be easily seen that when X is negative, the air mix door 22 will be closed completely and the water cock 32 of heater 20 will also be closed. When the value of X increases to zero, both door 22 and cock 32 will start to open. Since the heater 20 is energized via cock 32 at the same time that intake air first starts to flow therethrough, the tempeature of air entering the passenger compartment will increase smoothly at a nearly constant rate, as illustrated in Fig. 5, as the value of X increases in the positive range. Similarly, as the value of X decreases to zero and beyond, the air mix door 22 first closes off the heater 20 to ensure gradual cooling, and then the cock 32 closes to preserve heating energy.

This system compares favorably with the method employed in prior art air conditioners as illustrated in Fig. 6. In this case, the air mix door 22 begins to open and thereby permit air flow through heater 20 before the water cock 32 has been opened to heat heater 20. Thus, when the cock 32 finally opens as the value of X reaches a predetermined value C, the relatively great amount of air passing through heater 20 is abruptly heated. Since a noticeable fraction of the air entering the passenger compartment is abruptly heated, the temperature of the total air stream also increases suddenly, although to a lesser degree, as shown in the circled area D of Fig. 6.

.This abrupt change, which is similarly produced as the value of X decreases from a large value, unnecessarily discomforts the vehicle occupants.

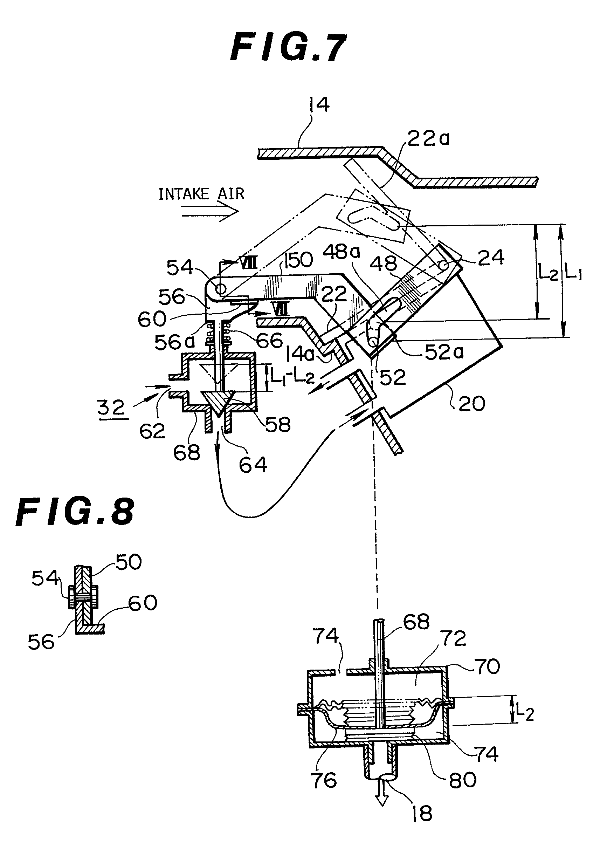

Referring to Figs. 7 and 8, there is shown another embodiment of the present invention. The characteristic feature of this embodiment is mainly a mechanical arrangement wherein intake door 12, blower 16, evaporator 18, selector 34, sensors 36, 38, calculating unit 40, controller 42, and position sensor 30 are omitted from the description for the sake of clarity. Only the differences between the first embodiment and this second embodiment will be described. In the second embodiment, a water cock controller such as 44 and a vacuum actuator such as 46 in the first embodiment are not provided. A first link member 48 is hinged at one end to pivot 24 of air mix door 22, and is provided with an L-like groove 48a at the other end. A second L-shaped link member 50 with a pivot pin 52 slidably received in an L-like groove 48a at one end and a second pivot pin 54 at the other end is connected to an upper end of a rod 56 of a valve member 58. Rod 56 has a stop 60, as seen best from Fig. 8, which stops further clockwise movement of second link member 50 from the position shown in solid line. Water cock 32 is provided with an inlet 62 and an outlet 64. A return spring 66 is provided around valve rod 56 between a cock case 68 and a rod shoulder 56a so as to normally bias valve 58 toward the position shown in phantom line.

Pivot 52 is connected to a shaft 68 of a vacuum actuator 70 which is provided with two chambers 72, 74 defined by a diaphragm 76. Chamber 72 has an opening 74 open to the atmosphere so that it is always at atmospheric pressure whereas chamber 72 can be under vacuum pressure when vacuum is applied to an opening 78 whereby rod 68 is pulled downward. Reference numeral 80 designates a spring biasing diaphragm 76 upwards.

In operation, assume that air mix door 22 is in the fully-heating, as shown in phantom line 22a in Fig. 7, and therefore that first and second link members 48 and 50 are also in the position, as shown in phantom line. When the calculating unit 40 outputs a signal indicating that the air within the compartment is to be cooled, controller 42 outputs a signal which drives vacuum actuator 70. Then vacuum pressure is applied through opening 78 to chamber 74 of vacuum actuator 70, rod 68 is pulled downward, first and second link members 48 and 50 are turned around pivots 24 and 54, respectively, to the position where link members 48, 50 are shown in solid line. Simultaneously with this action, air mix door 22 is turned counterclockwise around pivot 24 to the position, as shown in solid line and supported by a shoulder 14a of passageway 14, at which time the lower edge of second lever 50 is supported by stop 60. When rod 68 is further pulled down, pivot 52 is further pulled down from the position 52a as shown in phantom to the position 52 as shown in solid line. Simultaneously with this action, second lever 50 is pulled down, pivot 54 of second lever 50 and therefore valve rod 56 is pulled down against the action of spring 66, thereby blocking outlet 64 of water cock 32.

When, on the contrary, the compartment is to be warmed, and so the air mix door 22 is to be opened fully to the position shown in phantom line 22a, atmospheric air pressure is applied to opening 78, so that diaphragm 76 is pushed upwards by return spring 80. Thus, rod 64 and second link lever 50 are moved upwards, accompanied by the upward movement of valve rod 56 of water cock 32. When pivot 52 begins to shift to a slant portion of L-shaped groove 46a, first and second link members 48, 50 are rotated about pivots 24, 54 in opposite directions to the position as shown in phantom line. At the same time, air mix door 22 is rotated about pivot 24 to the position shown in phantom line 22a.

While the present invention has been described in terms of two embodiments, it should be noted that the present invention should be limited to them. Various changes and modifications could be made by those skilled in the art without departing from the spirit and scope of the present invention as set forth in the attached claims.

0073493

WHAT IS CLAIMED IS:

1.        An air conditioner for an automotive vehicle, said vehicle having a compartment and an air passageway leading thereto, the air conditioner driving controlled air to the compartment through said passageway, comprising:

a)    first sensing means (38) for sensing the temperature of the ambient air outside the automotive vehicle;

b)    second sensing means (36) for sensing the temperature of the air inside the automotive vehicle;

c)    means (20) disposed within said passageway and permitting the air to pass therethrough for heating the air passing therethrough;

d)    an air mix door (22) hinged at one end within the air passageway to the compartment for controlling by the degree of opening of the door the amount of the air flowing through said passageway to said compartment, said door being capable of moving to cover said heating means to prevent air from passing through said heating means;

e)    means (40) for calculating a desired degree of opening of the door from the outputs of said first and second sensing means;

f)    means (42, 26) connected to said door for moving the door to the opening corresponding to the output of said calculating means;

g)    means (44, 46, 32) responsive to the output of said calculating means for disabling said heating means slightly after the door has completely covered said heating means, and for enabling said heating means when the output of said calculating means indicates that the door should uncover said heating means.

2.      The air conditioner as claimed in claim 1, wherein said moving means includes means (26) for actuating said door, third sensing means (30) for sensing the degree of opening of said door, and means (42) for driving said actuating means such that the error between the outputs of said calculating means and said third means is minimized.

3.      The air conditioner as claimed in claim 1 or 2, wherein said heating means is adapted to heat the air by means of heated fluid recirculating through said heating means, wherein said disabling and enabling means includes means (32) for stopping and permitting the flow of the heated fluid, and means (46) for controlling the stopping and permitting means.

4.      The air conditioner as claimed in claim 2, wherein said moving means includes a first lever means (48) hinged at one end to the pivot of said door and having a groove (48a), a first pivot pin (52) received slidably in said groove and adapted to be actuated by said actuating means such that said first lever rotates about the pivot of

said door, said disabling and enabling means including a second lever (50) having said first pivot pin secured at one end thereof, a valve member (58) connected at a second pivot pin to the other end of said second lever, said valve member being normally biased so as to permit the flow of the heated fluid through the heating means, said valve member having a stop (60) for stopping the pivotal movement of said second lever about said second pivot pin in the same direction as before said door has completely covered said heating means, said groove having such a configuration that when said actuating means continues to actuate said first pivot pin after said door has completely covered said heating means, said second lever moves together with said valve member, thereby stopping the flow of the heating fluid.

5. The air conditioner as claimed in claim 4, wherein said second lever is L-shaped.

6. The air conditioner as claimed in claim 4, wherein said groove is L-shaped.

7. The air conditioner as claimed in claim 4, wherein said actuating means is of the vacuum-actuated type.

FIG.1

**FIG.2**

# FIG.3

OUTPUT $S_{40}$ OF CALC. UNIT

O

COMPARTMENT TEMPERATURE

# FIG.4

DEAD ZONE

COOL

ON

HOT

ON

$e_3$ O $e_4$

OUTPUT $S_3$ OF $A_3$

# FIG.5

TEMP OF AIR SUPPLIED TO COMPARTMENT

COCK OPENS

COCK CLOSES

FULLY COOLING

0%  OPENING OF AIR MIX DOOR

100% (FULLY HEATING)

$e_2$  $V_C$  VOLTAGE INDICATIVE OF POSITION OF AIR MIX DOOR  $S_{40}$  $V_H$

# FIG.6
## PRIOR ART

TEMP OF AIR SUPPLIED TO COMPARTMENT

D

COCK OPENS

COCK CLOSES

0% C (FULLY COOLING)  OPENING OF AIR MIX DOOR  100% (FULLY HEATING)

# *FIG.7*

INTAKE AIR

# *FIG.8*